# EUROPEAN PATENT SPECIFICATION

(11) **EP 3 597 969 B1**
(45) Date of publication and mention of the grant of the patent: **13.01.2021**
(21) Application number: 18382534.8
(22) Date of filing: 17.07.2018
(51) Int. Cl.: F16K 1/20, F16K 31/00, F01P 7/16, G05D 23/02

(54) **ACTUATOR DEVICE**
AKTUATORVORRICHTUNG
DISPOSITIF ACTIONNEUR

(43) Date of publication of application: 22.01.2020
(73) Proprietor: BORGWARNER EMISSIONS SYSTEMS SPAIN, S.L.U., 36315 Vigo Pontevedra (ES)
(72) Inventor: HERMIDA DOMÍNGUEZ, Xoan Xosé, E-36380 Pontevedra (ES); LAGÜELA LÓPEZ, Marta, E-36315 Vigo-Pontevedra (ES); MARTÍNEZ PENA, Carolina, E-36379 Nigran-Pontevedra (ES); JULIANA MÉNDEZ, Rafael, E-36201 Vigo (ES); LAGO LÓPEZ, David, E-15142 Arteixo (ES)
(74) Representative: ABG Intellectual Property Law, S.L.

(56) References cited:
- US-A- 2 439 336
- US-A- 3 300 136
- US-A- 3 420 293
- US-A1- 2018 106 177

## Description

### Object of the Invention

The present invention relates to an actuator device configured for impelling elements between two positions such that, in the end position with maximum extension of the actuator element, the force being applied is limited, preventing the impelled element from becoming damaged.

The actuator device is particularly designed for actuating a valve the opening or closing of which depends on the temperature of a fluid, for example the liquid coolant used in a heat recuperator arranged in an exhaust conduit of an internal combustion engine.

### Background of the Invention

Actuators, and particularly linear actuators, are devices that can be managed externally such that a rod is linearly displaced, moving in turn other devices or elements.

This movement can be controlled such that the rod can be positioned in two end positions or it can also allow a certain degree of regulation allowing the rod to be located in intermediate positions as well.

A very widely used type of actuator is the pneumatic actuator where the rod is attached to a piston impelled by a pressurized gas. If the piston receives the pressurized gas on one of its faces, the rod is moved in one direction, and if the piston receives the pressurized gas on the opposite face, then the rod is moved in the opposite direction. Actuators of this type are controlled by means of valves which allow the pressurized gas to enter specific chambers closed by the piston.

Another very widely used type of actuators is one based on the use of electrically excited solenoids. In this case, impelling is caused by the magnetic field generated by a current flow running through the solenoid where said magnetic field interacts with a permanent magnet attached to the rod.

Actuators based on changes in the volume of substances such as waxes, particularly when change from solid phase to liquid phase occurs, are also known, e.g. from US2439336A or US3300136A. There is a significant increase in volume in liquid phase, such that if the wax is stored in a chamber closed by a piston, the piston is displaced by the increase in volume.

The advantage of actuators of this type is that the composition of the wax can be determined so that the phase change takes place at a temperature of interest.

This is the case of valves which must be actuated when a pre-established temperature is reached.

Notwithstanding the foregoing, a problem these actuators have is that, in solid state, wax is an almost incompressible fluid, so the displacement of the piston or the rod when the phase change of the wax occurs depends almost exclusively on the change in volume thereof, applying the force required for this expansion to take place.

When the actuator moves the closure element of a valve, if the closure element has reached the closing condition prior to the displacement corresponding to the end position of the actuator, due to the expansion of the wax, the actuator will likewise move forward, where it may even destroy or damage the mechanism of the valve or the actuator.

To prevent this damage, in the state of the art the closing position is adjusted to a position close to, but without reaching, the closing condition. In other words, it is left partially open so as to have an allowance which prevents damage due to the additional expansion of the substance.

As a result, in order to protect the valve, it is not completely closed, leaving a minimum flow that cannot be avoided. This flow through the opening existing in the partial closure in the closing position is detrimental to the proper operation of systems incorporating a valve configured in this manner. For example, undesired overheating of the liquid coolant, pressure drops, etc., occur in a heat recovery system.

The present invention solves this problem by including a strain limiting element such that the actuator can be adjusted so that it allows for the complete closure of the valve without it becoming damaged due to excessive displacement of the actuator device.

### Description of the Invention

A first aspect of the invention is an actuator device having a linearly displaceable rod and incorporating components limiting the maximum strain that it applies in its end position.

The actuator device comprises at least:
- *a main rod;*
- *a first chamber housing a substance such that its specific volume changes in the event of temperature changes, the first chamber being configured to be in thermal contact with a heat source;*
- *an inner rod emerging from the first chamber and movable in an axial direction to apply a drive force in response to the variation in the volume of the substance housed in the first chamber.*

The main rod is the rod that moves according to an axial direction and is configured to be the element which moves or impels other devices or elements, for example, it opens and closes a valve.

On the other hand, there is a chamber housing the substance the volume of which changes with temperature and which is in thermal contact with the heat source causing the temperature change. The temperature change causes the change in the specific volume of the substance and this change in specific volume causes the axial displacement of an inner rod. The displacement of the inner rod is in response to variations in the volume of the substance housed in the chamber, and it is the inner impelling element of the actuator device.

This inner rod also moves according to the axial direction.

The device additionally comprises:
- *a first base adapted for being impelled by the inner rod and movable in the axial direction, wherein the main rod is movable in the axial direction and is attached to a second base either at an end or close to an end, wherein said second base is movable in the axial direction;*
- *an inner support surface attached to the first base by means of a spacer element separating it according to the axial direction from said first base, wherein the inner support surface limits the movement of the second base;*
- *a first spring with a first elastic constant located with one end supported on the first base and the opposite end supported on the second base, such that the second base can be moved closer to the first base by means of compressing the first spring.*

The inner rod impels the first base during its displacement. These two components do not have to be attached to one another; in fact, in one embodiment, when the inner rod is completely retracted into the first chamber, there is a separation or allowance between the inner rod and the first base. When the inner rod starts to be displaced, coming out of the first chamber due to the expansion of the substance, it first contacts the first base and they are displaced together the rest of the way.

The first base is therefore linked to the movement of the inner rod. On the other hand, the main rod is attached to the second base. The first spring is located between both bases such that the displacement of the inner rod and the first base is transmitted to the second base and therefore to the main rod through said spring.

The elastic constant of the first spring is calibrated such that the spring maintains its maximum extension and acts like a rigid solid in the main path of the main rod.

The maximum extension of the first spring is limited by the maximum separation between the first base and the second base. The movement of the second base is limited by the support on an inner support surface attached to the first base by means of a spacer element. In other words, the second base can be moved closer to and separated from the first base but without this separation exceeding that established by the position of the inner support surface.

The device additionally has the following components:
- *an outer shell attached to the first chamber and housing the assembly formed by the first base and the inner support surface, as well as the second base, wherein it additionally houses a second spring with a second elastic constant, and wherein:*
   *the second spring is located with an end supported on*
   *the first base and the opposite end supported on the outer shell, such that the first base is movable under compression of the second spring to recover the position of the first base when the inner rod no longer applies any force.*

Further, according to the invention, the outer shell is closed by a seating guiding the axial movement of the main rod.

The actuator device moves the main rod in one direction due to the impelling of the inner rod which transmits straining to said main rod through the first spring acting like a rigid solid. The position is recovered by means of the second spring that gradually compresses under the impelling of the inner rod. When the inner rod no longer applies any force, the energy stored in the second spring causes movement in the opposite direction.

This second spring has an end supported on the first base and the other end supported on the outer shell. It can be supported on the first base with the intermediation of a seating, or like in the preferred example that will be described below, through a perimetral flange of the spacer element between the inner support surface and the first base.

When the actuator impels the main rod, due to the inner rod being impelled by the volumetric expansion of the substance, a position corresponding to an end-of-stroke position can be reached. This end-of-stroke position for the main rod does not mean the end-of-stroke position for the inner rod the displacement of which can continue. In this case, the displacement of the main rod stops, the first base and the second base moving closer to one another by means of compressing the first spring. If the first spring has an elastic constant giving rise to a force on the main rod which does not exceed the maximum strain allowed by the device moved by the actuator in its end-of-stroke position, the mechanism of both the actuator and this second device will not sustain any damage.

The elastic constant of the first spring is set so as to limit the maximum strain that the actuator applies on the main rod.

The elastic constant of the second spring is set so as to assure the recovery of the retracted position of the first base when impelling of the inner rod ceases to exist. The first elastic constant and the second elastic constant can be different and each of them set according to the function of each spring.

Another object of the present invention is a valve actuated by an actuator device such as the one described. The valve has a seating closed by a flap moved by the actuator. When the flap reaches the position in which it closes the seating, if the inner rod of the actuator continues to move forward, the strain applied on the flap is limited, preventing the components of the valve, actuator, or both from becoming damaged.

Another object of the present invention is a heat recuperator comprising a heat exchanger in a bypass configuration with the exhaust conduit of an internal combustion engine. Exhaust gases circulate through the exhaust conduit. The assembly formed by the heat exchanger and the exhaust conduit additionally comprises a valve such as the one described. The valve has two end positions, one for the exhaust gas to circulate through the heat exchanger, recovering heat from the exhaust gases which would otherwise end up being discharged into the atmosphere, or directly through the exhaust conduit without going through the heat exchanger.

If the temperature of the liquid coolant reaches a predetermined temperature, it is be advisable to cut off the flow of exhaust gases through the exchanger by closing the passage to the exchanger by means of the valve and leaving the passage through the exhaust conduit free. Heat is therefore no longer transferred to the heat exchanger and the temperature of the liquid coolant is prevented from further increasing. According to one embodiment, the actuator has the chamber where the substance the volume of which changes with temperature is stored in thermal communication with the liquid coolant of the heat exchanger such that the temperature of the liquid coolant also establishes the temperature of the substance and the position of the valve.

According to a preferred example, the substance is wax and it changes from a solid state to a liquid state when the temperature increases, causing a significant expansion which leads to the extension of the main rod of the actuator. The extension of the main rod closes the passage of the hot gas to the heat exchanger, thereby preventing the temperature of the liquid coolant from further increasing.

### Description of the Drawings

These and other features and advantages of the invention will become clearer based on the following detailed description of a preferred embodiment given solely by way of illustrative and non-limiting example in reference to the attached drawings.
Figures 1, 2, and 3 show a preferred example of the actuator according to a longitudinal section view as well as a cross-section view of the flap to allow seeing the three most representative positions depending on the degree of extension of the actuator.
Figure 4 shows a perspective view of the actuator according to an embodiment attached to the flap of a valve of which only two seatings are seen.

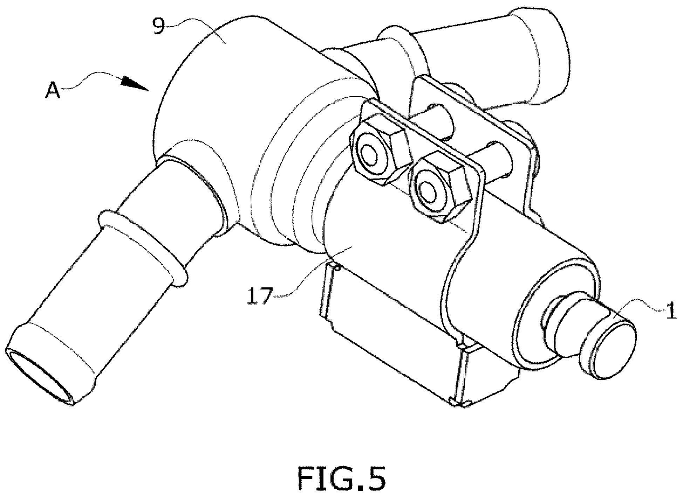

Figure 5 shows the same embodiment of the actuator shown in a perspective view and held by means of a clamp which allows adjusting its position according to the longitudinal direction of its main actuation rod.
Figures 6, 7, and 8 show an embodiment in which the actuator and the valve actuated by said actuator are installed in a heat recuperator. The three different drawings show the position of the valve and the actuating position thereof in an enlarged detail and a section view of the actuator.

### Detailed Description of the Invention

According to the first inventive aspect, the present invention relates to an actuator device for actuating linear displacement which allows actuating a valve between its open and closed positions, for example.

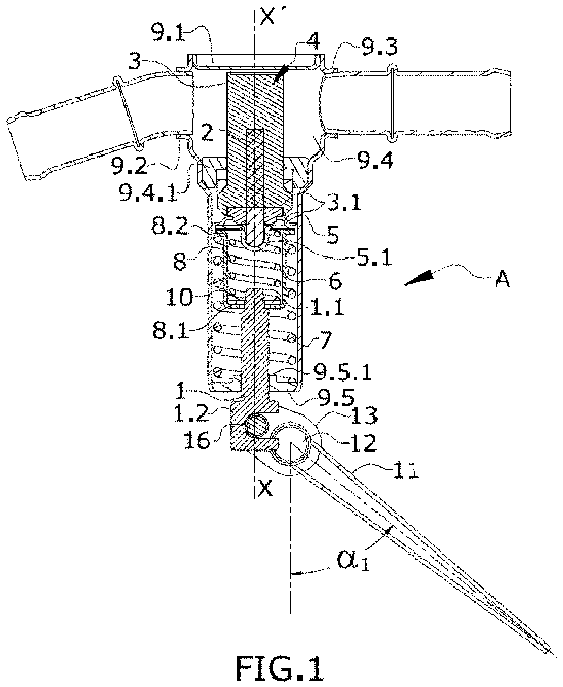

Figures 1, 2, and 3 show a preferred example of the actuator (A) according to a longitudinal section and according to three different operative positions.

The actuator (A) shown in Figure 1 is a preferred example of the invention. This preferred example is formed by an outer shell (9) with an essentially cylindrical configuration and two segments having a different diameter, a first narrower segment containing most of the components of the actuator (A) and a second segment having a larger diameter containing those components which are in contact with the liquid coolant. In this embodiment, the change in diameter allows the inner components to be assembled by insertion and the leak-tight closure separating the main inner components from the area in contact with the liquid coolant.

According to another embodiment, the actuator (A) shows a diameter of the outer shell (9) that is constant along its length.

Liquid coolant is mentioned because in the preferred example that will be described below, liquid coolant is used as a heat source which activates the displacement of the actuator (A). Nevertheless, the actuator can be activated with any other type of fluid or heat source.

Inside the outer shell (9), in the segment having a larger diameter, there is a first chamber (3) containing a substance (4) the specific volume of which can change in the event of temperature changes. In this preferred example, the substance used is wax, where it is understood as a substance formed by long-chain fatty acid esters as well as alcohols, also having a long chain, which are hard under cold conditions and often soft and moldable with the application of heat. Most importantly, when these substances melt, they transition from a solid state to a liquid state, the specific volume increases considerably, and they offer a very low degree of compressibility. These properties make them a very good impelling substance by means of phase change as a result of heating. Reference number (4) will also be used hereinafter for the wax.

The first chamber (3) partially houses an inner rod (2). When the specific volume of the wax (4) increases, the increase in the specific volume impels the inner rod (2) to come out.

The configuration of the outer shell (9), the distribution of the inner components, and the primary movement of the parts are according to an axial direction that will be identified as X-X'.

In this case, the inner rod (2) is ejected according to the axial direction X-X' and serves as an element for impelling the actuator (A).

The outer shell (9) has a second chamber (9.4) through which there circulates in this case the liquid coolant of an internal combustion engine which increases the temperature thereof with the heat coming from the exhaust gases by means of a heat exchanger (15). In the operative mode, it this liquid coolant which circulates through the second chamber (9.4), being in thermal communication with the first chamber (3) to allow transferring heat between the liquid coolant, which is housed in the second chamber (9.4), and the wax (4). Therefore, the temperature of the wax (4) tends to be the temperature of the fluid located in the second chamber (9.4).

In this second segment having a larger diameter in which the second chamber (9.4) is located, there is a coolant fluid inlet (9.2) and a coolant fluid outlet (9.3) allowing the flow through the second chamber (9.4).

The second chamber (9.4) has a closure ring (9.4.1) for fixing the position of the first chamber (3) and establishing leak-tightness with the components arranged on the other side by additionally using an O-ring which is not shown in the drawings.

Following the orientation shown in this Figure 1, there is a closure lid (9.1) above the second chamber (9.4). In the phase of inserting the inner components of the actuator (A), the closure ring (9.4.1) is fitted in a step for the transition between the segment having a larger diameter and the segment having a smaller diameter of the outer shell (9).

The inner rod (2), impelled by the increase in the specific volume of the wax (4), comes out through a leak-tight closure (3.1) of the first chamber (3) with a displacement according to the axial direction (X-X'). The leak-tight closure (3.1) is attached to the inner surface of the outer shell (9).

In this embodiment, the inner rod (2) has a rounded end with which it impels a first base (5). The configuration of the first base (5) is of a transverse plate having a seating (5.1) for receiving the rounded end of the inner rod (2).

In this embodiment, the seating (5.1) of the first base (5) is not attached to the end of the inner rod (2). This allows separation between them to be possible, for example as a result of the existence of a specific allowance when the inner rod (2) is completely retracted.

When viewing the actuator (A) from the outside, the mobile element is a main rod (1) which acts like a main impelling element intended for moving another device, for example, a valve (V).

The main rod (1) has an end located on the outside with a head (1.2) configured for being coupled to the element that it has to move. In this specific case, the head is a housing arranged transverse to the axial direction (X-X') allowing the entry of a drive pin (16). The opposite end of the main rod (1) is attached to a second base (10).

The device comprises between the first base (5) and the second base (10) a first spring (6) transferring the movement of the inner rod (2) to the main rod (1). The elastic constant of the first spring (6) is high enough so as to transfer the movement in the operative mode without it having to compress, but still, in the event of an excessive strain of the main rod (1), the spring compresses, preventing the main rod (1) from being displaced, moving out of the outer shell, even though the inner rod (2) continues to come out of the first chamber (3) .

The second base (10) can be axially displaced with respect to the first base (5) through the compression or extension of the first spring (6). The first base (5) and the second base (10) are spaced apart but the maximum separation is limited by an inner support surface (8.1) limiting the maximum separation of the second base (10). The inner support surface (8.1) is spaced from the first base (5) by a spacer element which in this embodiment is configured in the form of a cylindrical bushing (8).

The cylindrical bushing (8) shows at one end a base with a perforation for the passage of the main rod (1). The inner face of the base is the inner support surface (8.1) . In this embodiment, the opposite end of the cylindrical bushing (8) shows a perimetral flange (8.2) which is attached to the first base (5).

The first spring (6) and the second base (10) are therefore housed inside the cylindrical bushing (8) and the axial movement of both elements (6, 10) occurs therein.

The outer shell (9) is closed by a seating (9.5) guiding the axial movement (X-X') of the main rod (1).

A second spring (7) is housed inside the outer shell (9), with an end of this second spring (7) being supported on the first base (5) and the opposite end being supported on the seating (9.5) of the outer shell (9). In this specific embodiment, the seating in the first base (5) is produced with the intermediation of the perimetral flange (8.2) of the bushing (8) which is attached to the first base (5), where the flange (8.2) acts like a seating for the second spring (7) and the bushing (8) acts like an inner guide for the second spring (7) and an outer guide for the first spring (6).

The function of this second spring (7) is to recover the initial position of the first base (5) when the inner rod (2) is no longer impelled by the wax (4).

The elastic constant of this second spring (7) can be different from the elastic constant of the first spring (6).

When the inner rod (2) is retracted, the configuration of the actuator (A) is like the one shown in Figure 1, although in this embodiment the initial allowance between the inner rod (2) and the seating (5.1) of the first base (5) is not shown. Both the first spring (6) and the second spring (7) are at maximum extension.

As the temperature of the wax (4) increases, it will experience a change in state where its specific volume increases, causing the inner rod (2) to come out.

The inner rod (2) coming out impels the axial displacement of the first base (5) which in turn transmits a force in the axial direction (X-X') to the first spring (6) and the second spring (7).

Since one of the ends of the second spring (7) is supported on the seating (9.5) attached to the outer shell (9), the force which is transmitted to said second spring (7) causes the elastic deformation thereof, the spring compressing and storing elastic energy that will allow recovering the described initial position corresponding to the position prior to the inner rod (2) coming out.

As long as the main rod (1) is not limited during its displacement, the force which is transmitted to the first spring (6) causes the displacement of the second base (10), as long as said second base (10) is supported on the inner support surface (8.1) of the bushing (8), and therefore causes the extension of the main rod (1).

According to the embodiment shown in Figures 1, 2, and 3, at least the first chamber (3), the inner rod (2), the first base (5), the second base (10), the spacer element (8), the first spring (6), and the second spring (7) form an assembly which is housed in the outer shell (9), this assembly being kept in place through the closure of the outer shell (9) by means of the lid (9.1).

According to another embodiment, the outer shell (9) is formed by means of the attachment of a plurality of parts.

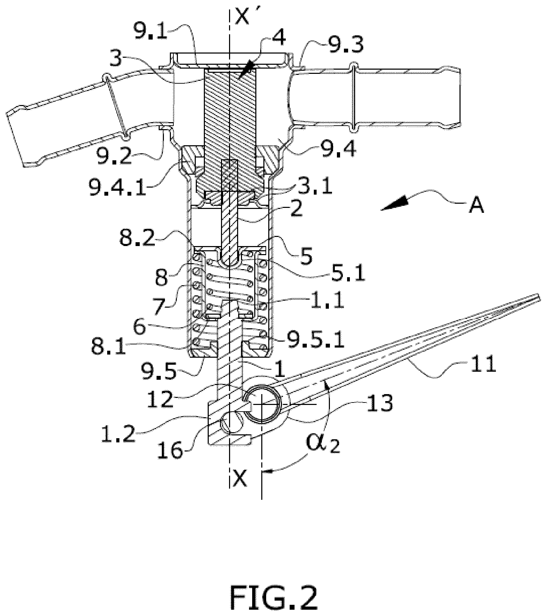

Figure 2 shows a position in which the main rod (1) has been displaced by the inner rod (2) with the intermediation of the first spring (6), where this first spring (6) shows the same degree of extension as the one it had before the displacement. In contrast, the second spring (7) has indeed been compressed as a result of this displacement of the first base (5).

Figures 1 and 2 show a cross-section view of a flap (11) which pivots about a shaft (12) by means of a cam (13) to which a pin (16) is fixed. The pin (16) is located in the housing of the head (1.2) of the main rod (1).

The axial displacement of the main rod (1) therefore imposes rotation of the flap (11).

Figure 1 shows the position of the non-extended main rod (1) resulting in a first angle (*α*₁) of the flap (11) and Figure 2 shows the extended position of the main rod (1) resulting in a second angle (*α*₂) of the flap (11), the second angle (*α*₂) in this embodiment being greater than the first angle (*α*₁).

The flap (11) is of a valve (V), and even though the valve (V) is not depicted in Figures 1 to 3, the first angle (*α*₁) and the second angle (*α*₂) of the flap (11) correspond to a first position in which a first seating (18) of the valve (V) is open and a second position in which the first seating (18) of the valve (V) is closed.

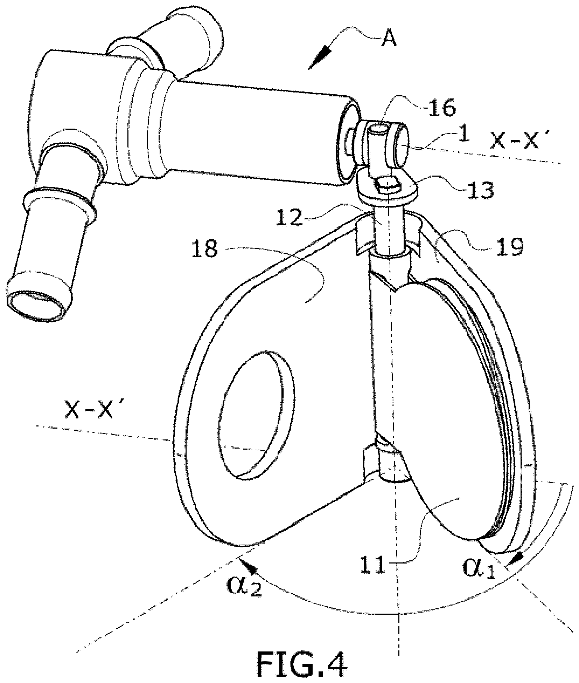

Figure 4 shows the flap (11) of a valve (V) according to an embodiment, the position of this flap (11) leaving the first seating (18) of the valve (V) located on the left, according to this perspective view, open, where the valve (V) is shown without elements closing its chambers so as to be able to see the inside thereof. This perspective view also shows the actuator (A) and the elements belonging to the kinematic chain between the actuator (A) and the flap (11). The angle *α* is an angle increasing in the direction shown in Figure 4.

In this position of the actuator (A), the flap (11) is closing a second seating (19) located on the right in Figure 4. The force for closing this second seating (19) is applied by the second spring (7) which is in charge of attaining the retracted position of the main rod (1).

After the extension of the actuator (A), the flap (11) moves from the second seating (19) located on the right to the first seating (18) located on the left in Figure 4.

Once the flap (11) closes the first seating (18), the main rod (1) will not be able to move forward any further without causing damage to any of the parts making up the kinematic chain, or the seating (18) of the valve, or even the actuator (A). Nevertheless, the specific volume of the wax (4) can continue to increase, and since it is an incompressible fluid the axial displacement of the inner rod (2) does not stop.

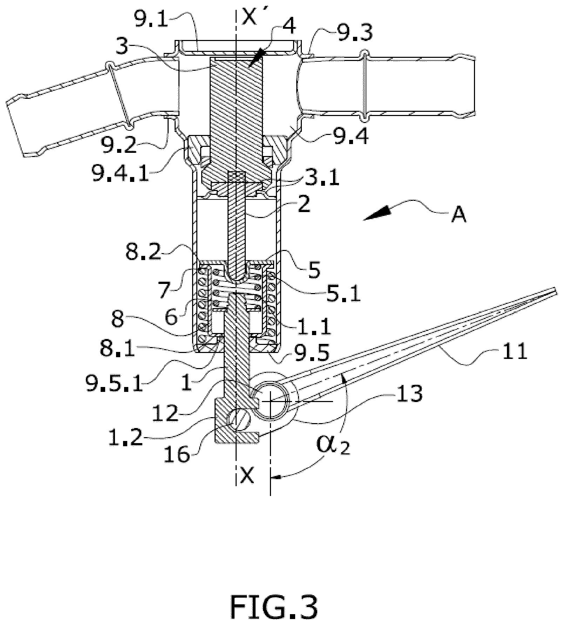

Figure 3 shows a position of the components of the actuator (A) when the inner rod (2) has continued to move forward after the closure of the first seating (18). The flap (11) still maintains the second angle (*α*₂) but the first base (5) has followed its axial displacement (X-X') where it is moved closer to the second base (10) at the expense of the elastic deformation of the first spring (6). This deformation of the first spring (6) prevents damage that would occur if the inner rod (2) impelled by the wax (4) were directly attached to the main rod (1).

There are two elements in this embodiment which prevent damage to the springs (6, 7) of the actuator (A).

The main rod (1) shows a flange (1.1) at the end which is housed inside the outer shell (9) such that, in the event of an excessive displacement, said flange would come into contact with the seating of the first base (5), limiting the maximum compression of the first spring (6). The distance of this flange (1.1) is calibrated so that the minimum distance the inner support surface (8.1) of the bushing (8) has to move in order to get closer to the seating in the first base (5) does not exceed the maximum deformation of the first spring (6) .

The seating (9.5) guiding the displacement of the main rod (1) also has a support flange (9.5.1) which, also in the event of an excessive displacement, would abut with the bushing (8), limiting the maximum compression of the second spring (7) and also preventing the accidental destruction thereof.

In this actuator (A), it is important to have the capacity to adjust the position thereof with respect to the position of the shaft (12) of the flap so as to determine, in the operative mode, the point at which compression of the first spring (6) starts, or also in the operative mode, the degree of compression or preloading of the second spring (7) after recovering its position by means of extension, for example.

According to one embodiment, the fixing of the actuator (A) is by means of a clamp (17) located in a cylindrical portion of the outer shell (9) for adjusting its position according to the axial direction (X-X'). The clamp (17) is tightened once it is positioned according to the axial direction (X-X'), which enables, for example, being able to assure complete closure of the first seating (18) of the valve (V) and minimal compression of the first spring (6). Another adjustment criterion is that of also assuring complete closure of the second seating (19) of the valve (V) and minimal compression of the second spring (7).

An advantage of fixing the actuator (A) by means of the clamp (17) is the ease in replacing or exchanging the actuator (A) without having to modify or change the rest of the elements moved by the actuator (A).

An example where replacement is required is when the actuator (A) is damaged. In this case, it will only be necessary to open the clamp (17) and release the link between the main rod (1) and the device moved by the actuator (A) so that the actuator (A) is released and can be replaced with another one.

Another example showing the advantage of fixing by means of clamp (17) is when the assembly formed by the actuator (A) and a device moved by the actuator (A), for example a valve (V), is manufactured according to different specifications. In this case, the assembly allows the actuator (A) to be interchangeable without having to modify the device moved by the actuator (A).

According to another embodiment, the attachment of the actuator (A) is carried out alternatively by means of a releasable fixing element not necessarily formed by a clamp (17), i.e., an element which likewise allows interchangeability of the actuator (A).

Another object of the invention is the combination of a valve and an actuator (A). According to an embodiment, the valve (V) comprises a flap (11) displaceable between two end positions, a first open position in which the seating is open which, in the operative mode, allows the passage of flow, and a second closed position in which the seating (18) is closed which, in the operative mode, prevents the passage of flow, where the flap (11) is actuated by an actuator device (A) according to an embodiment such as the one described above, such that:
- the main rod (1) of the actuator device (A) moves the flap (11) between its end positions, and
- once the flap (11) reaches the closing position in which it closes the first seating (18), an additional displacement of the inner rod (2) of the actuator (A) to close the flap (11) causes the first spring (6) to be at least partially compressed and the first base (5) and the second base (10) to move closer to one another.

The valve (V) according to this embodiment has a second seating (19) which is closed when the main rod (1) of the actuator (A) is retracted. Therefore, in a first end position of the flap (11):
- the first seating (18) of the valve is open,
- the second seating (19) of the valve is closed, and
- the main rod (1) of the valve is retracted.

Likewise, in the second end position of the flap (11):
- the first seating (18) of the valve is closed,
- the second seating (19) of the valve is open, and
- the main rod (1) of the valve is extended.

In the examples shown in the drawings, the flap (11) moves rotatably about a shaft (12) between a first angle (*α*₁) corresponding to the first end position of the flap (11) and a second angle (*α*₂) corresponding to the second end position of the flap (11), wherein the shaft (12) is attached to the main rod (1) of the actuator device (A) by means of a cam (13) which transforms the linear displacement of the main rod (1) into rotation of the shaft (12).

One of the most interesting applications is a heat recuperator (R) for recovering heat from a gas flowing through an exhaust conduit (14) which would otherwise end up being ejected into the atmosphere.

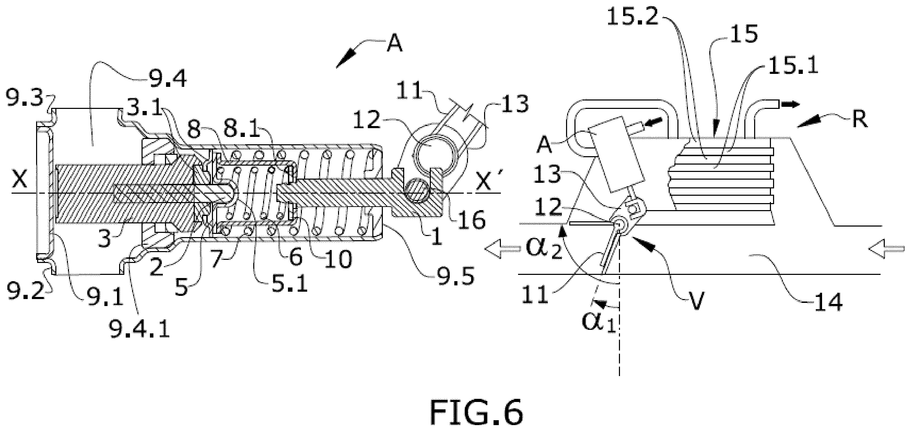

Figures 6, 7, and 8 show the heat recuperator (R) according to this embodiment on the right and a detail of the section of the actuator (A) on the left with the positions shown in Figures 1, 2, and 3, respectively. In the details of the actuator, the flap (11) has been cut out to allow seeing the inner elements in more detail.

The heat recuperator (R) comprises:
- an exhaust conduit (14) for the passage of hot exhaust gas;
- a heat exchanger (15) for heat exchange between a hot exhaust gas and a coolant fluid comprising a conduit (15.1) for the passage of hot gas and a conduit (15.2) for the passage of coolant fluid where:
   - the conduit (15.1) for the passage of gas through the heat exchanger (15) is in a bypass configuration with the exhaust conduit (14);
   - a valve (V) for establishing the passage of hot gas either through the exhaust conduit (14) or through the conduit (15.1) for the passage of gas of the heat exchanger (R) such that:
      - in the first position of the valve (V), the hot gas passes through the heat exchanger (15), and
      - in the second position of the actuated valve (V), the hot gas passes through the exhaust conduit (14);
      wherein the coolant fluid passing through the conduit (15.2) for the passage of coolant fluid is in thermal communication with the chamber (3) of the actuator device of the valve (V).

In Figure 6, the actuator (A) shows the main rod (1) retracted, leaving the position of the flap (11) of the valve (V) in a first angle (*α*₁) in which the flow circulating through the exhaust conduit (14) is interrupted and allowing the gas to flow to the heat exchanger (15) which is in a bypass configuration. In this position, heat from the exhaust gas is given off at least partially to the liquid coolant circulating through the heat exchanger (15). The inflow and outflow of the hot exhaust gas are depicted by means of hollow arrows and the inflow and outflow of the liquid coolant are shown by means of solid arrows.

The temperature of the liquid coolant gradually increases until reaching a temperature in which it is not advisable for it to keep recovering heat. Wax (4) has been selected so its solid-to-liquid phase change temperature is either at this limit temperature of the liquid coolant or at a lower pre-established temperature in order to take into account the response time of the actuator (A).

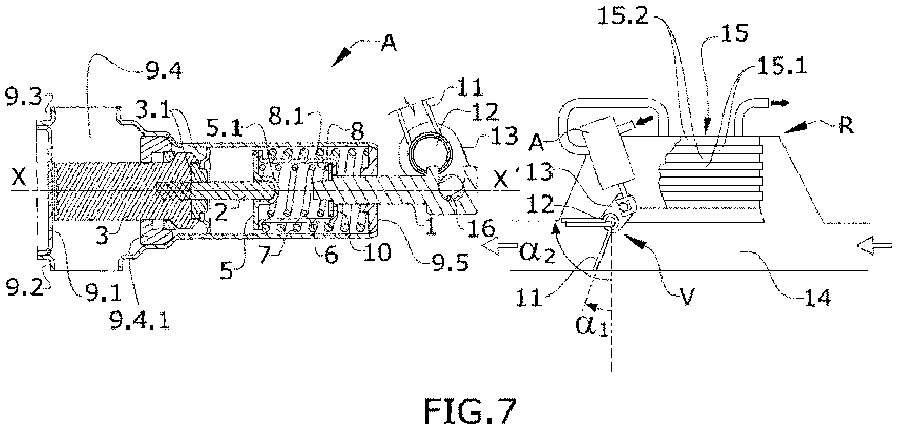

The circuit of the liquid coolant is passed through the second chamber (9.4) such that when the temperature of the liquid coolant reaches the maximum pre-established temperature, the wax (4) changes or has changed phase, causing the extension of the inner rod (2) as shown in Figure 7. The extension of the inner rod (2) impels the main rod (1), changing the position of the flap (11) to a second angle (*α*₂) where the first seating (18) of the valve for accessing the heat exchanger (15) is closed and the second seating (19) is open, leaving the passage through the exhaust conduit (14) free. The heat exchanger (15) therefore no longer transfers heat from the exhaust gases to the liquid coolant, preventing the temperature thereof from increasing beyond the maximum allowed temperature.

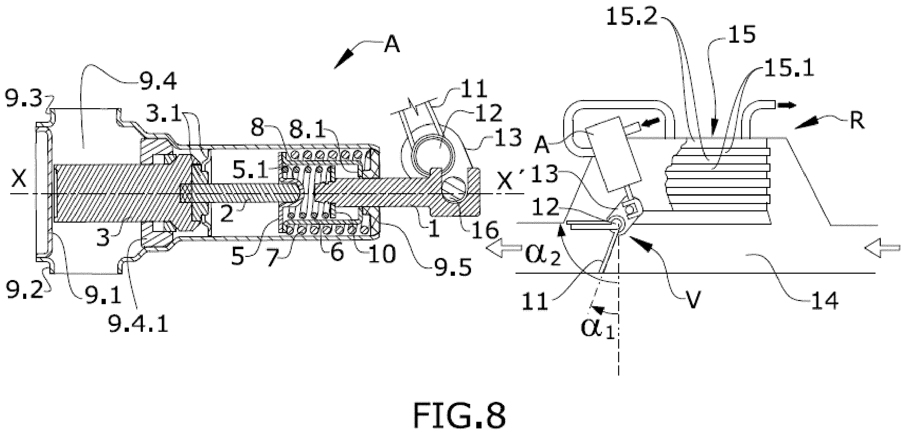

Nevertheless, the wax (4) can continue to expand. According to the invention, the actuator (A) prevents damage that would be caused by this excessive expansion by compensating for the inner rod (2) coming out by compression of the first spring (6) as shown in Figure 8. The valve (V) maintains the closed position of the first seating (18) but without damaging it.

According to this embodiment, the heat recuperator (R) comprises an actuator (A) with manifolds at the coolant fluid inlet (9.2) and coolant fluid outlet (9.3) manufactured in tube-shaped metal sheet. According to other embodiments, the fluid inlet manifolds, the fluid outlet manifolds, or both are carried out by means of windows made in the outer shell (9).

In the described embodiments, the seatings (18, 19) of the valve (V) are configured by means of a metal sheet punched and bent to form two angled planes, as shown in Figure 4. The resulting part is machined, for example, to allow for the passage of the shaft (12) of the flap (11) in the intersection of the two planes.

A body of the valve (V) that is inexpensive and has perfectly flat seatings (18, 19) is obtained with this specific configuration. The chambers of the valve (V) are formed by closing the space with an outer body configured by means of a punched and stamped metal sheet which adapts to the part containing the seatings (18, 19).

## Claims

1. An actuator device (A) for actuating linear displacement, comprising:
- a main rod (1);
- a first chamber (3) housing a substance (4) such that its specific volume changes in the event of temperature changes, the first chamber (3) being configured to be in thermal contact with a heat source;
- an inner rod (2) emerging from the first chamber (3) and movable in an axial direction (X-X') to apply a drive force in response to the variation in the volume of the substance (4) housed in the first chamber (3);
- a first base (5) adapted for being impelled by the inner rod (2) and movable in the axial direction (X-X'), wherein the main rod (1) is movable in the axial direction (X-X') and is attached to a second base (10) either at an end or close to an end, wherein said second base (10) is movable in the axial direction (X-X');
- an inner support surface (8.1) attached to the first base (5) by means of a spacer element (8) separating it according to the axial direction (X-X') from said first base (5), wherein the inner support surface (8.1) limits the movement of the second base (10);
- a first spring (6) with a first elastic constant located with one end supported on the first base (5) and the opposite end supported on the second base (10), such that the second base (10) can be moved closer to the first base (5) by means of compressing the first spring (6);
- an outer shell (9) attached to the first chamber (3) and housing the assembly formed by the first base (5) and the inner support surface (8.1), as well as the second base (10), wherein it additionally houses a second spring (7) with a second elastic constant, and wherein:
the second spring (7) is located with an end supported on the first base (5) and the opposite end supported on the outer shell (9), such that the first base (5) is movable under compression of the second spring (7) to recover the position of the first base (5) when the inner rod (2) no longer applies any force **characterised in that**
the outer shell (9) is closed by a seating (9.5) guiding the axial movement (X-X') of the main rod (1).

2. The device according to claim 1, wherein the substance (4) has a volumetric expansion coefficient such that its specific volume increases in the event of a temperature increase.

3. The device according to claim 2, wherein the substance (4) is such that its specific volume increases mainly when it changes phase, this substance (4) preferably being wax.

4. The device according to any of the preceding claims, wherein the spacer element (8) is an inner bushing (8) housing the first spring (6), the inner bushing (8) with an end attached to the first base (5) and the end opposite the end attached to the first base (5) comprises the inner support surface (8.1).

5. The device according to claim 4, wherein the inner bushing (8) comprises at one end a perimetral flange (8.2) and is attached to the first base (5) by means of said perimetral flange (8.2), and the second spring (7) is supported on the first base (5) through the perimetral flange (8.2).

6. The device according to any of the preceding claims, wherein at least the first chamber (3), the inner rod (2), the first base (5), the second base (10), the spacer element (8), the first spring (6), and the second spring (7) form an assembly which is housed in the outer shell (9), this assembly being kept in place through the closure of the outer shell (9).

7. The device according to any of the preceding claims, wherein the outer shell (9) of the actuator comprises a second chamber (9.4) in which the first chamber (3) is housed, and a fluid inlet (9.2) and a fluid outlet (9.3) for the passage of a fluid such that the substance (4) housed in the first chamber (3) is in thermal communication with the fluid passing through the second chamber (9.4).

8. The device according to claim 7, wherein the second chamber (9.4) and all the parts displaced by the action of the inner rod (2) are separated by a closure ring (9.4.1).

9. A valve (V) comprising:
a flap (11) displaceable between two end positions closing either a first seating (18) or a second seating (19), a first end position in which the first seating (18) is open and the second seating is closed, and a second end position in which the first seating (18) is closed and the second seating is open,
wherein the flap (11) is actuated by an actuator device (A) according to any of the preceding claims such that:
- the main rod (1) of the actuator device (A) moves the flap (11) between its end positions, and
- once the flap (11) reaches the second end position, an additional displacement of the inner rod (2) of the actuator (A) to close the first seating (18) causes the first spring (6) to be at least partially compressed and the first base (5) and the second base (10) to move closer to one another in the actuator (A).

10. The valve (V) according to claim 9, wherein the flap (11) moves rotatably about a shaft (12) between a first angle (*α*₁) corresponding to the first end position and a second angle (*α*₂) corresponding to the second end position in which the shaft (12) is attached to the main rod (1) of the actuator device (A) by means of a cam (13) which transforms the linear displacement of the main rod (1) into rotation of the shaft (12).

11. The valve (V) according to claim 9 or 10, wherein the first seating (18) and the second seating (19) are configured as a part made of a punched and bent metal sheet.

12. A heat recuperator (R) comprising:
- an exhaust conduit (14) for the passage of hot exhaust gas;
- a heat exchanger (15) for heat exchange between a hot exhaust gas and a coolant fluid comprising a conduit (15.1) for the passage of hot gas and a conduit (15.2) for the passage of coolant fluid, wherein:
• the conduit (15.1) for the passage of gas through the heat exchanger (15) is in a bypass configuration with the exhaust conduit (14);
• a valve (V) according to any of claims 9 to 11 for establishing the passage of hot gas either through the exhaust conduit (14) or through the conduit (15.1) for the passage of gas of the heat exchanger (15), such that:
- in the first end position of the valve (V), the hot gas passes through the heat exchanger (15), and
- in the second end position of the valve (V), the hot gas passes through the exhaust conduit (14);
wherein the coolant fluid passing through the conduit (15.2) for the passage of coolant fluid is in thermal communication with the chamber (3) of the actuator device (A) of the valve (V).

13. The heat recuperator (R) according to claim 12, wherein the second chamber (9.4) is in fluid communication with the coolant fluid through the coolant fluid inlet (9.2) and the coolant fluid outlet (9.3) of the outer shell (9) such that the opening of the valve (V) depends on the temperature of said coolant fluid.

14. The heat recuperator (R) according to any of claims 12 or 13, wherein the actuator (A) comprises manifolds at the coolant fluid inlet (9.2) and the coolant fluid outlet (9.3), preferably in tube-shaped metal sheet.

15. An internal combustion engine comprising a heat recuperator (R) according to any of claims 12 to 14.

## Patentansprüche

1. Aktuatorvorrichtung (A) zum Bewirken einer linearen Verschiebung, umfassend:
- eine Hauptstange (1);
- eine erste Kammer (3), die eine Substanz (4) so aufnimmt, dass sich ihr spezifisches Volumen im Falle von Temperaturänderungen ändert, wobei die erste Kammer (3) dazu ausgelegt ist, in thermischem Kontakt mit einer Wärmequelle zu stehen;
- eine innere Stange (2), die aus der ersten Kammer (3) austritt und in einer axialen Richtung (X-X') beweglich ist, um eine Antriebskraft als Reaktion auf die Änderung des Volumens der in der ersten Kammer (3) untergebrachten Substanz (4) aufzubringen;
- eine erste Basis (5), die von der inneren Stange (2) angetrieben werden kann und in der axialen Richtung (X-X') beweglich ist, wobei die Hauptstange (1) in der axialen Richtung (X-X') beweglich ist und an einer zweiten Basis (10) entweder an einem Ende oder in der Nähe eines Endes befestigt ist, wobei die zweite Basis (10) in der axialen Richtung (X-X') beweglich ist;
- eine innere Auflagefläche (8.1), die an der ersten Basis (5) mittels eines Distanzelements (8) befestigt ist, welches sie in der axialen Richtung (X-X') von der ersten Basis (5) trennt, wobei die innere Auflagefläche (8.1) die Bewegung der zweiten Basis (10) begrenzt;
- eine erste Feder (6) mit einer ersten elastischen Konstante, die mit einem Ende auf der ersten Basis (5) und mit dem entgegengesetzten Ende auf der zweiten Basis (10) gelagert ist, so dass die zweite Basis durch Zusammendrücken der ersten Feder (6) näher an die erste Basis (5) bewegt werden kann;
- eine äußere Hülle (9), die an der ersten Kammer (3) befestigt ist und die Anordnung, die durch die erste Basis (5) und die innere Stützfläche (8.1) gebildet wird, sowie die zweite Basis (10) aufnimmt, wobei sie zusätzlich eine zweite Feder (7) mit einer zweiten elastischen Konstante aufnimmt, und wobei:
die zweite Feder (7) mit einem Ende an der ersten Basis (5) und dem entgegengesetzten Ende an der äußeren Hülle (9) gelagert ist, so dass die erste Basis (5) unter dem Zusammendrücken der zweiten Feder (7) beweglich ist, um die Position der ersten Basis (5) wiederherzustellen,
wenn die innere Stange (2) keine Kraft mehr ausübt,
**dadurch gekennzeichnet, dass**
die äußere Hülle (9) durch einen Sitz (9.5) geschlossen ist, der die axiale Bewegung (X-X') der Hauptstange (1) führt.

2. Vorrichtung nach Anspruch 1, wobei die Substanz (4) einen solchen volumetrischen Ausdehnungskoeffizienten aufweist, dass ihr spezifisches Volumen im Falle einer Temperaturerhöhung zunimmt.

3. Vorrichtung nach Anspruch 2, wobei die Substanz (4) so beschaffen ist, dass ihr spezifisches Volumen hauptsächlich dann zunimmt, wenn sich ihre Phase ändert, wobei diese Substanz (4) vorzugsweise Wachs ist.

4. Vorrichtung nach einem der vorhergehenden Ansprüche, wobei das Distanzelement (8) eine innere Buchse (8) ist, welche die erste Feder (6) aufnimmt, wobei die innere Buchse (8) mit einem Ende an der ersten Basis (5) befestigt ist und das Ende gegenüber dem an der ersten Basis (5) befestigten Ende die innere Auflagefläche (8.1) umfasst.

5. Vorrichtung nach Anspruch 4, wobei die innere Buchse (8) an einem Ende einen Umfangsflansch (8.2) umfasst und mit Hilfe des Umfangsflansches (8.2) an der ersten Basis (5) befestigt ist, und die zweite Feder (7) über den Umfangsflansch (8.2) auf der ersten Basis (5) gelagert ist.

6. Vorrichtung nach einem der vorhergehenden Ansprüche, wobei mindestens die erste Kammer (3), die innere Stange (2), die erste Basis (5), die zweite Basis (10), das Distanzelement (8), die erste Feder (6) und die zweite Feder (7) eine Anordnung bilden, die in der äußeren Hülle (9) untergebracht ist, wobei diese Anordnung durch den Verschluss der äußeren Hülle (9) an Ort und Stelle gehalten wird.

7. Vorrichtung nach einem der vorhergehenden Ansprüche, wobei die äußere Hülle (9) des Aktuators eine zweite Kammer (9.4), in der die erste Kammer (3) untergebracht ist, sowie einen Fluideinlass (9.2) und einen Fluidauslass (9.3) für den Durchgang eines Fluids umfasst, so dass die in der ersten Kammer (3) untergebrachte Substanz (4) in thermischer Verbindung mit dem durch die zweite Kammer (9.4) strömenden Fluid steht.

8. Vorrichtung nach Anspruch 7, wobei die zweite Kammer (9.4) und alle Teile, die durch die Wirkung der inneren Stange (2) verschoben werden, durch einen Verschlussring (9.4.1) getrennt sind.

9. Ventil (V), umfassend:
eine Klappe (11), die zwischen zwei Endpositionen, die entweder einen ersten Sitz (18) oder einen zweiten Sitz (19) schließen, einer ersten Endposition, in der der erste Sitz (18) offen und der zweite Sitz geschlossen ist, und einer zweiten Endposition, in der der erste Sitz (18) geschlossen und der zweite Sitz offen ist,
verschiebbar ist, wobei die Klappe (11) durch eine Aktuatorvorrichtung (A) nach einem der vorhergehenden Ansprüche betätigt wird, so dass
- die Hauptstange (1) der Aktuatorvorrichtung (A) die Klappe (11) zwischen ihren Endpositionen bewegt, und
- sobald die Klappe (11) die zweite Endposition erreicht hat, eine zusätzliche Verschiebung der inneren Stange (2) des Aktuators (A) zum Schließen des ersten Sitzes (18) bewirkt, dass die erste Feder (6) zumindest teilweise zusammengedrückt wird und sich die erste Basis und die zweite Basis (10) im Aktuator (A) einander annähern.

10. Ventil (V) nach Anspruch 9, wobei sich die Klappe (11) drehbar um eine Welle (12) zwischen einem ersten Winkel (α₁), der der ersten Endposition entspricht, und einem zweiten Winkel (α₂), der der zweiten Endposition entspricht, bewegt, in der die Welle (12) an der Hauptstange (1) der Betätigungsvorrichtung (A) mittels eines Nockens (13) befestigt ist, der die lineare Verschiebung der Hauptstange (1) in eine Drehung der Welle (12) umwandelt.

11. Ventil (V) nach Anspruch 9 oder 10, wobei der erste Sitz (18) und der zweite Sitz (19) als ein Teil aus einem gestanzten und gebogenen Metallblech ausgeführt sind.

12. Wärmerekuperator (R), umfassend:
- eine Abgasleitung (14) für den Durchgang von heißem Abgas;
- einen Wärmetauscher (15) zum Wärmeaustausch zwischen einem heißen Abgas und einem Kühlfluid, umfassend eine Leitung (15.1) für den Durchgang von heißem Gas und eine Leitung (15.2) für den Durchgang von Kühlfluid, wobei:
• die Leitung (15.1) für den Durchgang von Gas durch den Wärmetauscher (15) in einer Bypass-Konfiguration mit der Abgasleitung (14) ist;
• ein Ventil (V) nach einem der Ansprüche 9 bis 11 zur Herstellung des Durchgangs von heißem Gas entweder durch die Abgasleitung (14) oder durch die Leitung (15.1) für den Durchgang von Gas des Wärmetauschers (15), so dass:
- in der ersten Endposition des Ventils (V) das heiße Gas durch den Wärmetauscher (15) strömt, und
- in der zweiten Endposition des Ventils (V) das heiße Gas durch
die Abgasleitung (14) strömt;
wobei das Kühlfluid, das durch die Leitung (15.2) für den Durchgang des Kühlfluids strömt, in thermischer Verbindung mit der Kammer (3) der Aktuatorvorrichtung (A) des Ventils (V) steht.

13. Wärmerekuperator (R) nach Anspruch 12, wobei die zweite Kammer (9.4) über den Kühlfluideinlass (9.2) und den Kühlfluidauslass (9.3) der äußeren Hülle (9) in Fluidverbindung mit dem Kühlfluid steht, so dass die Öffnung des Ventils (V) von der Temperatur des Kühlfluids abhängt.

14. Wärmerekuperator (R) nach einem der Ansprüche 12 oder 13, wobei der Aktuator (A) Sammelleitungen am Kühlfluideinlass (9.2) und am Kühlfluidauslass (9.3) umfasst, vorzugsweise aus rohrförmigem Metallblech.

15. Verbrennungsmotor mit einem Wärmerekuperator (R) nach einem der Ansprüche 12 bis 14.

## Revendications

1. Dispositif actionneur (A) pour commander un déplacement linéaire, comprenant:
- une tige principale (1);
- une première chambre (3) logeant une substance (4) telle que son volume spécifique change en cas de changements de température, la première chambre (3) étant configurée pour être en contact thermique avec une source de chaleur;
- une tige interne (2) émergeant de la première chambre (3) et mobile dans une direction axiale (X-X') pour appliquer une force d'entraînement en réponse à la variation du volume de la substance (4) logée dans la première chambre (3);
- une première base (5) adaptée pour être poussée par la tige interne (2) et mobile dans la direction axiale (X-X'), où la tige principale (1) est mobile dans la direction axiale (X-X') et est attachée à une seconde base (10) soit à une extrémité soit près d'une extrémité, où ladite seconde base (10) est mobile dans la direction axiale (X-X');
- une surface de support interne (8.1) attachée à la première base (5) au moyen d'un élément d'espacement (8) la séparant selon la direction axiale (X-X') de ladite première base (5), où la surface de support interne (8.1) limite le mouvement de la seconde base (10);
- un premier ressort (6) ayant une première constante élastique positionné avec une extrémité supportée sur la première base (5) et l'extrémité opposée supportée sur la seconde base (10), de telle sorte que la seconde base (10) peut être déplacée plus près de la première base (5) grâce à la compression du premier ressort (6);
- une enveloppe externe (9) attachée à la première chambre (3) et logeant l'ensemble formé par la première base (5) et la surface de support interne (8.1), ainsi que la seconde base (10), où elle loge en outre un second ressort (7) avec une seconde constante élastique, et où:
le second ressort (7) est positionné avec une extrémité supportée sur la première base (5) et l'extrémité opposée supportée sur l'enveloppe externe (9), de telle sorte que la première base (5) est mobile sous la compression du second ressort (7) pour récupérer la position de la première base (5) lorsque la tige interne (2) n'applique plus de force, **caractérisé en ce que**
l'enveloppe externe (9) est fermée par un siège (9.5) guidant le mouvement axial (X-X') de la tige principale (1) .

2. Dispositif selon la revendication 1, dans lequel la substance (4) a un coefficient de dilatation volumétrique tel que son volume spécifique augmente en cas d'une augmentation de température.

3. Dispositif selon la revendication 2, dans lequel la substance (4) est telle que son volume spécifique augmente principalement lorsqu'elle change de phase, cette substance (4) étant de préférence de la cire.

4. Dispositif selon l'une quelconque des revendications précédentes, dans lequel l'élément d'espacement (8) est une douille interne (8) logeant le premier ressort (6), la douille interne (8) ayant une extrémité attachée à la première base (5) et l'extrémité opposée à l'extrémité attachée à la première base (5) comprend la surface de support interne (8.1).

5. Dispositif selon la revendication 4, dans lequel la douille interne (8) comprend à une extrémité un rebord périphérique (8.2) et est attachée à la première base (5) au moyen dudit rebord périphérique (8.2), et le second ressort (7) est supporté sur la première base (5) grâce au rebord périphérique (8.2).

6. Dispositif selon l'une quelconque des revendications précédentes, dans lequel au moins la première chambre (3), la tige interne (2), la première base (5), la seconde base (10), l'élément d'espacement (8), le premier ressort (6) et le second ressort (7) forment un ensemble qui est logé dans l'enveloppe externe (9), cet ensemble étant maintenu en place grâce à la fermeture de l'enveloppe externe (9).

7. Dispositif selon l'une quelconque des revendications précédentes, dans lequel l'enveloppe externe (9) de l'actionneur comprend une seconde chambre (9.4) dans laquelle est logée la première chambre (3), et une entrée de fluide (9.2) et une sortie de fluide (9.3) pour le passage d'un fluide de telle sorte que la substance (4) logée dans la première chambre (3) est en communication thermique avec le fluide passant à travers la seconde chambre (9.4).

8. Dispositif selon la revendication 7, dans lequel la seconde chambre (9.4) et l'ensemble des pièces déplacées par l'action de la tige interne (2) sont séparés par une bague de fermeture (9.4.1).

9. Vanne (V) comprenant:
un volet (11) déplaçable entre deux positions extrêmes fermant soit un premier siège (18) soit un second siège (19), une première position extrême dans laquelle le premier siège (18) est ouvert et le second siège est fermé, et une seconde position extrême dans laquelle le premier siège (18) est fermé et le second siège est ouvert, où le volet (11) est actionné par un dispositif actionneur (A) selon l'une quelconque des revendications précédentes de telle sorte que:
- la tige principale (1) du dispositif actionneur (A) déplace le volet (11) entre ses positions extrêmes, et
- une fois que le volet (11) atteint la seconde position extrême, un déplacement supplémentaire de la tige interne (2) de l'actionneur (A) pour fermer le premier siège (18) amène le premier ressort (6) à être au moins partiellement comprimé et la première base (5) et la seconde base (10) à se rapprocher l'une de l'autre dans l'actionneur (A).

10. Vanne (V) selon la revendication 9, dans laquelle le volet (11) se déplace en rotation autour d'un axe (12) entre un premier angle (α₁) correspondant à la première position extrême et un second angle (α₂) correspondant à la seconde position extrême dans laquelle l'axe (12) est attaché à la tige principale (1) du dispositif actionneur (A) au moyen d'une came (13) qui transforme le déplacement linéaire de la tige principale (1) en rotation de l'axe (12) .

11. Vanne (V) selon la revendication 9 ou 10, dans laquelle le premier siège (18) et le second siège (19) sont configurés sous forme d'une pièce composée d'une feuille métallique perforée et pliée.

12. Récupérateur de chaleur (R) comprenant:
- un conduit d'échappement (14) pour le passage du gaz d'échappement chaud;
- un échangeur de chaleur (15) pour l'échange de chaleur entre un gaz d'échappement chaud et un fluide réfrigérant comprenant un conduit (15.1) pour le passage de gaz chaud et un conduit (15.2) pour le passage de fluide réfrigérant, où:
• le conduit (15.1) pour le passage de gaz à travers l'échangeur de chaleur (15) est dans une configuration de dérivation avec le conduit d'échappement (14);
• une vanne (V) selon l'une quelconque des revendications 9 à 11 pour établir le passage de gaz chaud soit à travers le conduit d'échappement (14) soit à travers le conduit (15.1) pour le passage de gaz de l'échangeur de chaleur (15), de telle sorte que:
- dans la première position extrême de la vanne (V), le gaz chaud passe à travers l'échangeur de chaleur (15), et
- dans la seconde position extrême de la vanne (V), le gaz chaud passe à travers le conduit d'échappement (14);
dans lequel le fluide réfrigérant passant à travers le conduit (15.2) pour le passage de fluide réfrigérant est en communication thermique avec la chambre (3) du dispositif actionneur (A) de la vanne (V).

13. Récupérateur de chaleur (R) selon la revendication 12, dans lequel la seconde chambre (9.4) est en communication fluidique avec le fluide réfrigérant à travers l'entrée de fluide réfrigérant (9.2) et la sortie de fluide réfrigérant (9.3) de l'enveloppe externe (9) de telle sorte que l'ouverture de la vanne (V) dépend de la température dudit fluide réfrigérant.

14. Récupérateur de chaleur (R) selon l'une quelconque des revendications 12 ou 13, dans lequel l'actionneur (A) comprend des collecteurs au niveau de l'entrée de fluide réfrigérant (9.2) et de la sortie de fluide réfrigérant (9.3), de préférence en feuille métallique de forme tubulaire.

15. Moteur à combustion interne comprenant un récupérateur de chaleur (R) selon l'une quelconque des revendications 12 à 14.
